(19) Europäisches Patentamt
European Patent Office
Office européen des brevets

(11) EP 4 700 890 A1

(12) # EUROPEAN PATENT APPLICATION
published in accordance with Art. 153(4) EPC

(43) Date of publication:
**25.02.2026 Bulletin 2026/09**

(21) Application number: **23934520.0**

(22) Date of filing: **27.04.2023**

(51) International Patent Classification (IPC):
***H01M 10/0567*** *(2010.01)*

(52) Cooperative Patent Classification (CPC):
Y02E 60/10

(86) International application number:
**PCT/CN2023/091092**

(87) International publication number:
**WO 2024/221320 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **WANG, Fulin**
  **Ningde, Fujian 352100 (CN)**
- **HAN, Changlong**
  **Ningde, Fujian 352100 (CN)**
- **HUANG, Lei**
  **Ningde, Fujian 352100 (CN)**
- **DENG, Yilin**
  **Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **SECONDARY BATTERY AND ELECTRICAL APPARATUS**

(57) The present application provides a secondary battery. The secondary battery comprises a positive electrode plate, a negative electrode plate, and an electrolyte solution. The positive electrode plate comprises a positive electrode film layer. The positive electrode film layer contains a positive electrode active material. The electrolyte solution comprises a solvent, a lithium salt, and an additive. The additive includes a compound containing an isocyanate group. The mass fraction of the compound containing the isocyanate group in the electrolyte solution is a, with $11 \leq n/10000a \leq 96600$ where $n = b \times c \times d$; n is the real surface area of the positive electrode active material per unit apparent surface area; b is the BET specific surface area of the positive electrode active material, in $cm^2/g$; c is the mass fraction of the positive electrode active material in the positive electrode film layer; and d is the coating areal density of the positive electrode film layer, in $g/cm^2$. The present application further relates to a corresponding electrical apparatus. The secondary battery can effectively remove water from the electrolyte solution, resulting in not only a good cycling performance and storage performance but also a relatively good charging performance.

EP 4 700 890 A1

## Description

### TECHNICAL FIELD

The present application relates to the technical field of secondary batteries, particularly to a secondary battery and an electrical apparatus.

### BACKGROUND

In recent years, with the increasingly wide use of secondary batteries, secondary batteries are widely used in energy storage power systems such as hydropower, thermal power, wind power and solar power stations, as well as electric tools, electric bicycles, electric motorcycles, electric vehicles, aerospace and other fields.

With the continuous development of secondary battery technology, higher requirements have also been put forward for the service life and charging performance of secondary batteries. Therefore, one of the directions focused by those skilled in the art is to find a secondary battery with a relatively long service life and a relatively good charging performance.

### SUMMARY OF THE INVENTION

The present application is made in view of the above problems. One of the objectives of the present application is to provide a secondary battery, which has not only a relatively good cycling performance and storage performance but also a relatively low directive current resistance and a relatively good charging performance.

In order to achieve the above objective, a first aspect of the present application provides a secondary battery, comprising a positive electrode plate, a negative electrode plate, and an electrolyte solution. The positive electrode plate comprises a positive electrode film layer. The positive electrode film layer contains a positive electrode active material. The electrolyte solution comprises a solvent, a lithium salt, and an additive. The additive includes a compound containing an isocyanate group. The mass fraction of the compound containing the isocyanate group in the electrolyte solution is a, with $11 \leq n/10000a \leq 96600$ where $n = b \times c \times d$;

where n is the real surface area of the positive electrode active material per unit apparent surface area; b is the BET specific surface area of the positive electrode active material, in $cm^2/g$; c is the mass fraction of the positive electrode active material in the positive electrode film layer; and d is the coating areal density of the positive electrode film layer, in $g/cm^2$.

In the present application, by using the compound containing the isocyanate group as the additive in the electrolyte solution and based on the BET specific surface area b of the positive electrode active material in the secondary battery, the mass fraction c of the positive electrode active material in the positive electrode film layer, and the coating areal density d of the positive electrode film layer, the mass fraction a of the compound containing the isocyanate group in the electrolyte solution is determined according to the formula $11 \leq n/10000a \leq 96600$, where $n = b \times c \times d$. Thus, based on the residual water content of the positive electrode active material in the secondary battery (the residual water content of the positive electrode active material is related to the above bed), the amount of the compound containing the isocyanate group used in the electrolyte solution of the secondary battery can be determined such that the content of the compound containing the isocyanate group in the electrolyte solution of the secondary battery is moderate, so that not only can the water in the electrolyte solution of the secondary battery be effectively removed to reduce the influence of water on the service life of the secondary battery, but also a significant increase in the direct current impedance of the secondary battery due to an excessive amount of the compound containing the isocyanate group can be avoided, without causing a considerable influence on the charging performance of the secondary battery.

In any embodiment, $243 \leq n/10000a \leq 96525$. Thus, the initial directive current resistance of the secondary battery can be further reduced.

In any embodiment, $243 \leq n/10000a \leq 927$. Thus, where the secondary battery has a relatively small initial directive current resistance, the high-temperature cycling performance and high-temperature storage performance of the secondary battery can be further improved, so that the secondary battery has a more excellent comprehensive performance.

In any embodiment, the range of the BET specific surface area b of the positive electrode active material is 50000 $cm^2/g$-300000 $cm^2/g$.

In any embodiment, the range of the mass fraction c of the positive electrode active material in the positive electrode film layer is 90%-99%.

In any embodiment, the range of the coating areal density d of the positive electrode film layer of the secondary battery is 0.013 $g/cm^2$-0.0325 $g/cm^2$.

In any embodiment, the mass fraction a of the compound containing the isocyanate group in the electrolyte solution is 0.001%-0.5%.

In any embodiment, the compound containing the isocyanate group includes one or more of compounds of the following structural formulas:

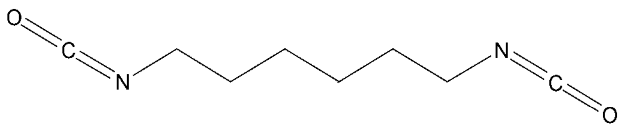 ; 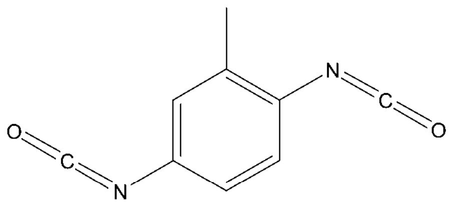 ;

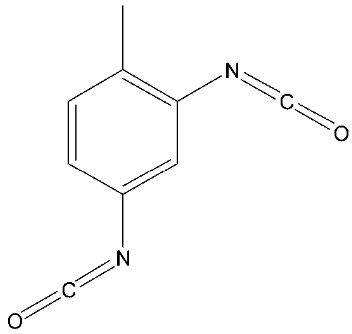 ; 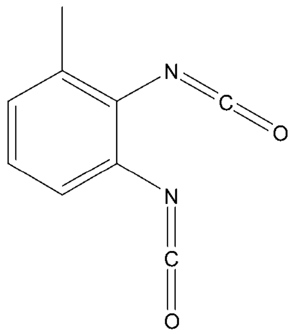 ; 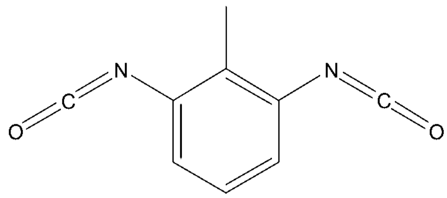 ;

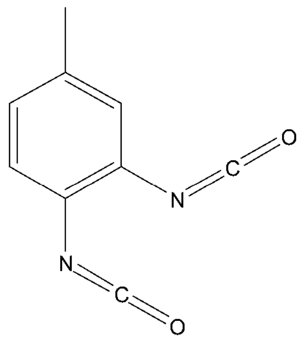 ; 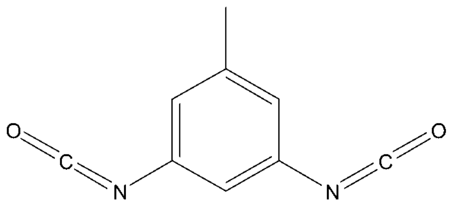 ; 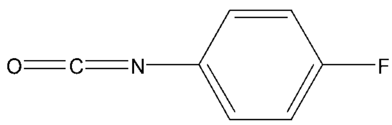 ;

and

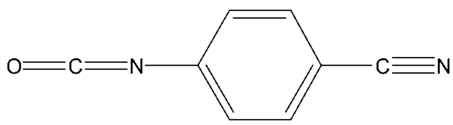 .

Among them, the isocyanate compounds containing benzene rings have a larger steric hindrance and volume, the formed film is thicker, and the impedance of the formed SEI film is greater. However, a lone pair of electrons in the isocyanate will be conjugated with the benzene ring, reducing the ability thereof to remove water and acids. The isocyanate compound containing the element F can increase the wettability of the SEI film. The monoisocyanate compounds are not easily condensed into films and do not easily participate in film formation, which can reduce the impedance caused by film formation. The above compound containing the isocyanate group can be selected according to actual requirements.

In any embodiment, the additive further includes a film-forming auxiliary agent. Thus, a solid electrolyte interface film can be formed on a surface of the electrode during the charging and discharging process of the battery.

In any embodiment, the film-forming auxiliary agent includes an unsaturated carbonate.

In any embodiment, the solvent includes one or more of a cyclic ester and a chain ester.

In any embodiment, the cyclic ester includes one or more of ethylene carbonate, propylene carbonate, fluoroethylene carbonate, and γ-butyrolactone.

In any embodiment, the chain ester includes one or more of dimethyl carbonate, ethyl methyl carbonate, diethyl carbonate, methyl formate, methyl acetate, ethyl acetate, methyl acetate, methyl propionate, ethyl propionate, methyl butyrate, and ethyl butyrate.

In any embodiment, the lithium salt includes one or more of $LiPF_6$, $LiAsF_6$, $LiBF_4$, LiSCN, $LiTaF_6$, $LiSnF_6$, and $LiCF_3SO_3$.

In any embodiment, the positive electrode active material includes one or more of lithium iron phosphate, lithium nickel cobalt manganese oxide, lithium nickel cobalt aluminum oxide, lithium cobalt oxide, lithium manganate, lithium manganese phosphate, and lithium iron manganese phosphate.

A second aspect of the present application provides an electrical apparatus, comprising the secondary battery according to the first aspect of the present application.

By using the compound containing the isocyanate group in the electrolyte solution of the secondary battery of the present application and based on the BET specific surface area of the positive electrode active material in the secondary battery, the mass fraction of the positive electrode active material in the positive electrode film layer, and the coating areal density of the positive electrode film layer in the positive electrode plate, the mass fraction of the compound containing the isocyanate group in the electrolyte solution of the secondary battery is determined according to the specific formula such that the content of the compound containing the isocyanate group in the electrolyte solution of the secondary battery is moderate, so that not only can the water in the electrolyte solution of the secondary battery be effectively removed to reduce the influence of water on the cycling performance and storage performance of the secondary battery, thus prolonging the service life of the secondary battery, but also an excessively great initial directive current resistance of the secondary battery due to an excessive amount of the isocyanate group can be avoided, without causing a considerable influence on the charging performance of the secondary battery.

## DESCRIPTION OF DRAWINGS

In order to better describe and illustrate the embodiments and/or examples of the present application, reference can be made to one or more of the accompanying drawings. Additional details or examples used to describe the accompanying drawings should not be considered as limiting the scope of any of the disclosed application, the currently described embodiments and/or examples, and the best modes of the present application currently understood.

FIG. 1 is a schematic view of a secondary battery according to an embodiment of the present application;
FIG. 2 is an exploded view of a secondary battery according to an embodiment of the present application as shown in FIG. 1; and
FIG. 3 is a schematic view of an electrical apparatus in which a secondary battery serves as a power source according to an embodiment of the present application.

Description of reference numerals:

5. Secondary battery; 51. case; 52. electrode assembly; 53. cover plate; and 6. electrical apparatus.

## DETAILED DESCRIPTION

Hereinafter, embodiments of the secondary battery and electrical apparatus of the present application are described in detail and specifically disclosed with appropriate reference to the accompanying drawings. However, unnecessary detailed description will be omitted in some cases. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical value range "a-b" represents an abbreviated representation of any combination of real numbers between a and b, where a and b are both real numbers. For example, the numerical value range "0-5" indicates that all real numbers between "0-5" have been listed herein, and "0-5" is only a shortened representation of these numerical combinations. In addition, when a parameter is expressed as an integer $\geq 2$, it is equivalent to disclosing that the parameter is, for example, an integer of 2, 3, 4, 5, 6, 7, 8, 9, 10, 11, 12, etc.

Unless otherwise specified, all the embodiments and optional embodiments of the present application can be

combined with each other form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), which means that the method may comprise steps (a) and (b) performed in order, or may comprise steps (b) and (a) performed in order. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically specified, "including" and "comprising" mentioned in the present application indicate either open inclusion or closed inclusion. For example, the terms "including" and "comprising" may indicate that other components not listed may also be included or comprised, or only the listed components may be included or comprised.

Unless otherwise specifically specified, in the present application, the term "or" is inclusive. By way of example, the phrase "A or B" means "A, B, or both A and B". More specifically, any one of the following conditions satisfies "A or B": A is true (or present) and B is false (or absent); A is false (or absent) and B is true (or present); or both A and B are true (or present).

The weight in the specification of the present application may be in units of μg, mg, g, kg, or other weight units well known in the field of chemical engineering.

At present, due to the great development of secondary batteries, higher requirements have also been put forward for the service life and electrical performance of secondary batteries. Since the positive electrode active material (e.g., lithium iron phosphate (LFP)) has a relatively large specific surface area and a relatively high surface energy, it easily absorbs water and difficult to completely dry. The residual water will be slowly released into the electrolyte solution and react with a lithium salt to generate HF, which catalyzes a reaction between the lithium salt with the solvent, dissolves the SEI film, dissolves metals, and accelerates the aging of battery cells and components, leading to the risks of increased gas production, deteriorated interfaces, increased reversible lithium loss, rapid life decay, etc. The compound containing the isocyanate group has more lone pairs of electrons, and the ability thereof to remove water and bind acids is strong. Adding it to the electrolyte solution can reduce the influence of water on the performance of the battery cell; moreover, it can participate in film formation at the anode and the cathode, improving the battery life. However, the compound containing the isocyanate group has a relatively large impedance. If the amount thereof is too large, an increase in the direct current impedance of the secondary battery easily occurs, deteriorating the charging ability of the battery.

To this end, after research, the inventors have discovered a secondary battery. By using a compound containing an isocyanate group in the electrolyte solution thereof and based on the BET specific surface area of the positive electrode active material in the secondary battery, the mass fraction of the positive electrode active material in the positive electrode film layer, and the coating areal density of the positive electrode film layer in the positive electrode plate, the mass fraction of the compound containing the isocyanate group in the electrolyte solution is determined according to the specific formula, the content of the compound containing the isocyanate group in the electrolyte solution of the secondary battery can be moderate, so that not only can the water in the electrolyte solution be effectively removed to reduce the influence of water on the performance of the secondary battery, but also a considerable influence on the electrical performance of the secondary battery due to an excessive amount of the isocyanate group can be avoided.

In some embodiments, the first aspect of the present application provides a secondary battery, comprising a positive electrode plate, a negative electrode plate, and an electrolyte solution. The positive electrode plate comprises a positive electrode film layer. The positive electrode film layer contains a positive electrode active material. The electrolyte solution comprises a solvent, a lithium salt, and an additive. The additive includes a compound containing an isocyanate group. The mass fraction of the compound containing the isocyanate group in the electrolyte solution is a, with $11 \leq n/10000a \leq 96600$ where $n = b \times c \times d$,

where n is the real surface area of the positive electrode active material in the positive electrode film layer per unit apparent surface area; b is the BET specific surface area of the positive electrode active material, in $cm^2/g$; c is the mass fraction of the positive electrode active material in the positive electrode film layer; and d is the coating areal density of the positive electrode film layer in the positive electrode plate, in $g/cm^2$.

The residual water content of the positive electrode active material in the secondary battery is not only related to the specific surface area of the positive electrode active material but also to the coating areal density of the positive electrode film layer in the positive electrode plate and the mass fraction (i.e., loading value) of the positive electrode active material in the positive electrode film layer, and the product (n) of the above three is the real surface area of the positive electrode active material per unit apparent surface area. In addition, the larger the value of n, the stronger the water absorption capacity, and the more the residual water in the positive electrode active material.

By using the compound containing the isocyanate group as the additive in the electrolyte solution of the secondary battery of the present application and based on the BET specific surface area b of the positive electrode active material in the secondary battery, the mass fraction c of the positive electrode active material in the positive

electrode film layer in the positive electrode plate, and the coating areal density d of the positive electrode film layer, the mass fraction a of the compound containing the isocyanate group in the electrolyte solution is determined according to the formula $11 \leq n/10000a \leq 96600$, where $n = b \times c \times d$. By means of the above technical solution, the content of the compound containing the isocyanate group in the electrolyte solution can be determined based on the residual water content of the positive electrode active material in the secondary battery such that the content of the compound containing the isocyanate group in the electrolyte solution of the secondary battery is moderate, so that not only can the water in the electrolyte solution be effectively removed to reduce the influence of water on the service life of the secondary battery, but also a significant increase in the direct current impedance of the secondary battery due to an excessive amount of the isocyanate compound can be avoided, without causing a considerable influence on the charging performance of the secondary battery.

It needs to be noted that the apparent surface area, i.e., geometric surface area, can be measured with a ruler; the real surface area, i.e., microscopic surface area, can be measured by a BET specific surface area tester; and the real surface area of the positive electrode active material per unit apparent surface area is the real surface area of the positive electrode active material on 1 $cm^2$ of the positive electrode film layer.

In some embodiments, $243 \leq n/10000a \leq 96525$. It has been found by research that controlling the value of n/a within the range of 243-96525 can further reduce the initial directive current resistance (DCR) of the secondary battery. The initial directive current resistance thereof can reach 639 mohm or less.

In some embodiments, $243 \leq n/10000a \leq 927$. It has been found by research that controlling the value of n/a within the range of 243-927 can further improve the high-temperature cycling performance and high-temperature storage performance of the secondary battery. The capacity retention rate of the secondary battery after 1000 cycles at 60°C can reach 89.9% or more, and the capacity retention rate of the secondary battery after 200 days storage at 60°C can reach 94% or more.

In some embodiments, the range of the BET specific surface area b of the positive electrode active material is 50000 $cm^2/g$-300000 $cm^2/g$. It can be understood that the BET specific surface area of the positive electrode active material can be, but not limited to, 50000 $cm^2/g$, 80000 $cm^2/g$, 100000 $cm^2/g$, 120000 $cm^2/g$, 140000 $cm^2/g$, 160000 $cm^2/g$, 180000 $cm^2/g$, 200000 $cm^2/g$, 220000 $cm^2/g$, 240000 $cm^2/g$, 260000 $cm^2/g$, 280000 $cm^2/g$, and 300000 $cm^2/g$.

In some embodiments, the range of the mass fraction c of the positive electrode active material in the positive electrode film layer is 90%-99%. It can be understood that the mass fraction of the positive electrode active material in the positive electrode film layer can be, but not limited to, 90%, 91%, 92%, 93%, 94%, 95%, 96%, 97%, 98%, and 99%.

In some embodiments, the range of the coating areal density d of the positive electrode film layer in the positive electrode plate of the secondary battery is 0.013 $g/cm^2$-0.0325 $g/cm^2$. It can be understood that the coating areal density of the positive electrode film layer in the positive electrode plate of the secondary battery can be, but not limited to, 0.013 $g/cm^2$, 0.015 $g/cm^2$, 0.0175 $g/cm^2$, 0.02 $g/cm^2$, 0.0225 $g/cm^2$, 0.025 $g/cm^2$, 0.0275 $g/cm^2$, 0.03 $g/cm^2$, and 0.0325 $g/cm^2$.

In some embodiments, the mass fraction a of the compound containing the isocyanate group in the electrolyte solution is 0.001%-0.5%. It can be understood that the mass fraction of the compound containing the isocyanate group in the electrolyte solution can be, but not limited to, 0.001%, 0.005%, 0.01%, 0.05%, 0.1%, 0.15%, 0.2%, 0.25%, 0.3%, 0.35%, 0.4%, 0.45%, and 0.5%.

In some embodiments, the compound containing the isocyanate group includes one or more of compounds of the following structural formulas:

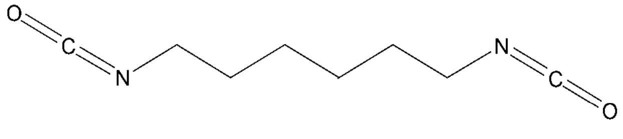 ; 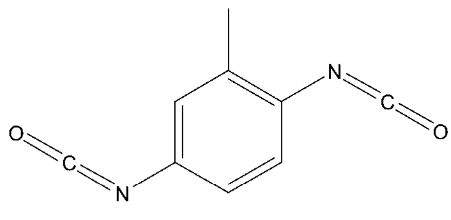 ;

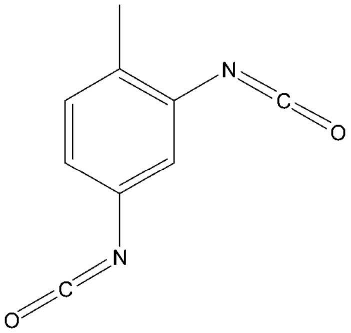 ; 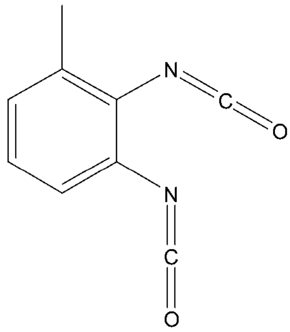 ; 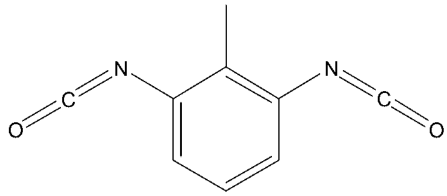 ;

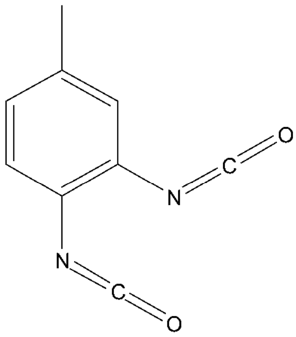 ; 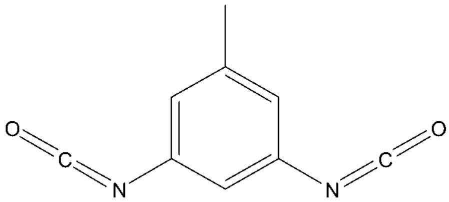 ; 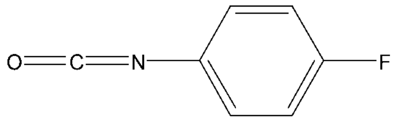 ;

and

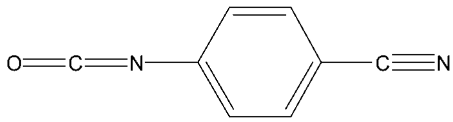 .

By using the above compound containing the isocyanate group in the electrolyte solution, the water in the electrolyte solution can be effectively removed. Among them, the isocyanate compounds containing benzene rings have a larger steric hindrance and volume, the formed film is thicker, and the impedance of the formed SEI film is greater. However, a lone pair of electrons in the isocyanate will be conjugated with the benzene ring, reducing the ability thereof to remove water and acids. The isocyanate compound containing the element F can increase the wettability of the SEI film. The monoisocyanate compounds are not easily condensed into films and do not easily participate in film formation, which can reduce the impedance caused by film formation. The above compound containing the isocyanate group can be selected according to actual requirements.

In some embodiments, the additive in the electrolyte solution further includes a film-forming auxiliary agent. The film-forming auxiliary agent in the electrolyte solution can form a solid electrolyte interface film (SEI film) on the surface of the electrode during the charging and discharging process of the battery.

In some embodiments, the film-forming auxiliary agent includes, but is not limited to, an unsaturated carbonate.

In some embodiments, the solvent includes one or more of a cyclic ester and a chain ester. The cyclic ester includes, but is not limited to, one or more of ethylene carbonate, propylene carbonate, fluoroethylene carbonate, and γ-butyrolactone, and the chain ester includes, but is not limited to, one or more of dimethyl carbonate, ethyl methyl carbonate, diethyl carbonate, methyl formate, methyl acetate, ethyl acetate, methyl acetate, methyl propionate, ethyl propionate, methyl butyrate, and ethyl butyrate.

In some embodiments, the lithium salt includes one or more of $LiPF_6$, $LiAsF_6$, $LiBF_4$, LiSCN, $LiTaF_6$, $LiSnF_6$, and $LiCF_3SO_3$.

In some embodiments, the positive electrode active material includes one or more of lithium iron phosphate, lithium nickel cobalt manganese oxide, lithium nickel cobalt aluminum oxide, lithium cobalt oxide, lithium manganate, lithium manganese phosphate, and lithium iron manganese phosphate.

The second aspect of the present application further provides an electrical apparatus, comprising the secondary battery according to the first aspect of the present application.

The secondary battery and electrical apparatus of the present application are described below with appropriate reference to the accompanying drawings.

Unless otherwise specified, the mentioned assemblies in batteries and the material types or contents are also

applicable to both lithium-ion secondary batteries and sodium-ion secondary batteries.

In an embodiment of the present application, a secondary battery is provided.

In general, the secondary battery comprises a positive electrode plate, a negative electrode plate, an electrolyte, and a separator. During the charging and discharging process of the battery, active ions are intercalated and deintercalated back and forth between the positive electrode plate and the negative electrode plate. The electrolyte plays a role of conducting ions between the positive electrode plate and negative electrode plate. The separator is arranged between the positive electrode plate and the negative electrode plate and mainly serves to prevent a short circuit between the positive and negative electrodes while allowing ions to pass through.

[Positive electrode plate]

The positive electrode plate comprises a positive electrode current collector and a positive electrode film layer arranged on at least one surface of the positive electrode current collector.

As an example, the positive electrode current collector has two surfaces opposite in its own thickness direction, and the positive electrode film layer is arranged on either one or both of the two opposite surfaces of the positive electrode current collector.

In some embodiments, the positive electrode current collector can be a metal foil or a composite current collector. For example, as the metal foil, an aluminum foil can be used. The composite current collector can comprise a polymer material substrate layer and a metal layer formed on at least one surface of the polymer material substrate layer. The composite current collector can be formed by forming a metal material on the polymer material substrate. The metal material includes, but is not limited to, aluminum, an aluminum alloy, nickel, a nickel alloy, titanium, a titanium alloy, silver, a silver alloy, etc. The polymer material substrate (such as a substrate of polypropylene (PP), polyethylene terephthalate (PET), polybutylene terephthalate (PBT), polystyrene (PS), polyethylene (PE), etc.)

In some embodiments, the positive electrode active material can comprise a positive electrode active material well known in the art for batteries.

As an example, the positive electrode active material of the lithium-ion secondary battery can include at least one of the following materials: a lithium-containing phosphate with an olivine structure, lithium transition metal oxide, and respective modified compounds thereof. However, the present application is not limited to these materials, and other traditional materials that can be used as positive electrode active materials for batteries can also be used. Only a single one of or a combination of two or more of these positive electrode active materials can be used. Examples of lithium transition metal oxides may include, but are not limited to, at least one of a lithium-cobalt oxide (such as $LiCoO_2$), a lithium-nickel oxide (such as $LiNiO_2$), a lithium-manganese oxide (such as $LiMnO_2$ or $LiMn_2O_4$), a lithium-nickel-cobalt oxide, a lithium-manganese-cobalt oxide, a lithium-nickel-manganese oxide, a lithium-nickel-cobalt-manganese oxide (such as $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$)), a lithium-nickel-cobalt-aluminum oxide (such as $LiNi_{0.85}Co_{0.15}Al_{0.05}O_2$), and a modified compound thereof. Examples of the lithium-containing phosphate with the olivine structure can include, but are not limited to, at least one of lithium iron phosphate (such as $LiFePO_4$ (also abbreviated as LFP)), a composite material of lithium iron phosphate and carbon, lithium manganese phosphate (such as $LiMnPO_4$), a composite material of lithium manganese phosphate and carbon, lithium iron manganese phosphate, and a composite material of lithium iron manganese phosphate and carbon.

As an example, the positive electrode active material in the sodium-ion secondary battery can include at least one of the following materials: a sodium transition metal oxide, a polyanionic compound, and a Prussian blue compound. However, the present application is not limited to these materials, and other traditional well-known materials that can be used as positive electrode active materials for sodium-ion batteries may also be used.

As an optional technical solution of the present application, in the sodium transition metal oxide, the transition metal can be at least one of Mn, Fe, Ni, Co, Cr, Cu, Ti, Zn, V, Zr, and Ce. The sodium transition metal oxide is, for example, $Na_xMO_2$, where M is at least one of Ti, V, Mn, Co, Ni, Fe, Cr, and Cu, and $0 < x \leq 1$.

As an optional technical solution of the present application, the polyanionic compound can be a class of compounds having a sodium ion, a transition metal ion, and a tetrahedral $(YO_4)^{n-}$ anionic unit. The transition metal can be at least one of Mn, Fe, Ni, Co, Cr, Cu, Ti, Zn, V, Zr, and Ce; Y can be at least one of P, S, and Si; and n represents the valence state of $(YO_4)^{n-}$.

The polyanionic compounds can also be a class of compounds having a sodium ion, a transition metal ion, a tetrahedral $(YO_4)^{n-}$ anionic unit, and a halogen anion. The transition metal can be at least one of Mn, Fe, Ni, Co, Cr, Cu, Ti, Zn, V, Zr, and Ce; Y can be at least one of P, S, and Si, n represents the valence state of $(YO_4)^{n-}$; and the halogen can be at least one of F, Cl, and Br.

The polyanionic compound can also be a class of compounds having a sodium ion, a tetrahedral $(YO_4)^{n-}$ anionic unit, a polyhedral unit $(ZO_y)^{m+}$, and optionally a halogen anion. Y can be at least one of P, S, and Si; n represents the

valence state of $(YO_4)^{n-}$; Z represents a transition metal and can be at least one of Mn, Fe, Ni, Co, Cr, Cu, Ti, Zn, V, Zr, and Ce; m represents the valence state of $(ZO_y)^{m+}$; and the halogen can be at least one of F, Cl, and Br.

The polyanionic compound is, for example, at least one of $NaFePO_4$, $Na_3V_2(PO4)_3$ (sodium vanadyl phosphate, abbreviated as NVP), $Na_4Fe_3(PO_4)_2(P_2O_7)$, NaM'PO4F (M' is one or more of V, Fe, Mn, and Ni), and $Na_3(VO_y)_2(PO_4)_2F_{3-2y}$ ($0 \leq y \leq 1$).

The Prussian blue compound can be a class of compounds having a sodium ion, a transition metal ion, and a cyanide ion ($CN^-$). The transition metal may be at least one of Mn, Fe, Ni, Co, Cr, Cu, Ti, Zn, V, Zr and Ce. The Prussian blue compound is, for example, $Na_aMe_bMe'_c(CN)_6$, where Me and Me' are each independently at least one of Ni, Cu, Fe, Mn, Co, and Zn, $0 < a \leq 2$, $0 < b < 1$, and $0 < c < 1$.

The weight percentage of the positive electrode active material in the positive electrode film layer is 80-100 wt%, based on the total weight of the positive electrode film layer.

In some embodiments, the positive electrode film layer further comprises optionally a binder. As an example, the binder can include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. The weight percentage of the binder in the positive electrode film layer is 0-20 wt%, based on the total weight of the positive electrode film layer.

In some embodiments, the positive electrode film layer further comprises optionally a conductive agent. As an example, the conductive agent may comprise at least one of superconducting carbon, acetylene black, carbon black, Ketjen black, carbon dot, carbon nanotube, graphene, and carbon nanofiber. The weight percentage of the conductive agent in the positive electrode film layer is 0-20 wt%, based on the total weight of the positive electrode film layer.

In some embodiments, the positive electrode plate may be prepared by: dispersing the above components, such as the positive electrode active material, the conductive agent, the binder and any other component, for preparing the positive electrode plate in a solvent (such as N-methyl pyrrolidone) to form a positive electrode slurry which has a solid content of 40 mass percentage (wt%)-80 wt%, adjusting the viscosity at room temperature to 5000 millipascals · second (mPa·s)-25000 mPa·s, and applying the positive electrode slurry to a surface of a positive electrode current collector, followed by drying and then cold pressing by a cold rolling mill to form a positive electrode plate. The coating areal density of the positive electrode powder per unit area is 150 milligrams/square meter ($mg/m^2$)-350 $mg/m^2$, and the compacted density of the positive electrode plate is 3.0 grams/square meter ($g/cm^3$)-3.6 $g/cm^3$, optionally 3.3 $g/cm^3$-3.5 $g/cm^3$.

The calculation formula for the compacted density is:

the compacted density = the coating areal density / (the thickness of the electrode plate after pressing - the thickness of the current collector).

The mass M of the positive electrode active material in the positive electrode membrane per unit area can be obtained by weighing with a standard balance.

The thickness T of the positive electrode membrane can be measured by a sub-micron caliper, for example, it can be measured by Model Mitutoyo293-100 sub-micron caliper with a precision of 0.1 μm. It needs to be noted that the thickness of the positive electrode membrane described in the present application refers to the thickness of the positive electrode membrane in the positive electrode plate which has been compacted by cold pressing and is used for assembling the battery.

[Negative electrode plate]

The negative electrode plate comprises a negative electrode current collector and a negative electrode film layer arranged on at least one surface of the negative electrode current collector, and the negative electrode film layer comprises a negative electrode active material.

For example, the negative electrode current collector has two surfaces opposite to each other in a thickness direction of the negative electrode current collector, and the negative electrode film layer is arranged on either or both of the two opposite surfaces of the negative electrode current collector.

In some embodiments, the negative electrode current collector can be a metal foil or a composite current collector. For example, as the metal foil, a copper foil can be used. The composite current collector can comprise a polymer material substrate layer and a metal layer formed on at least one surface of the polymer material substrate. The composite current collector can be formed by forming a metal material on the polymer material substrate. The metal material includes, but is not limited to, copper, a copper alloy, nickel, a nickel alloy, titanium, a titanium alloy, silver, a silver alloy, etc. The polymer material substrate includes, but is not limited to, a substrate of polypropylene (PP), polyethylene terephthalate (PET), polybutylene terephthalate (PBT), polystyrene (PS), polyethylene (PE), etc.

In some embodiments, the negative electrode active material can be a negative electrode active material well

known in the art for batteries.

As an example, the negative electrode active material of the lithium-ion secondary battery may include at least one of the following materials: artificial graphite, natural graphite, soft carbon, hard carbon, a silicon-based material, a tin-based material, lithium titanate, etc. The silicon-based material can be selected from at least one of elemental silicon, a silicon-oxygen compound, a silicon-carbon composite, a silicon-nitrogen composite, or a silicon alloy. The tin-based material can be selected from at least one of elemental tin, a tin-oxygen compound, or a tin alloy. However, the present application is not limited to these materials. Other traditional materials that can be used as negative electrode active materials for batteries may also be used. Only a single one of or a combination of two or more of these negative electrode active materials can be used.

As an example, the negative electrode active material of the sodium-ion secondary battery is generally a hard carbon material, or a two-dimensional metal carbide or nitride. Preferably, the negative electrode active material of the sodium-ion secondary battery is generally a hard carbon material.

The weight percentage of the negative electrode active material in the negative electrode film layer is 70-100 wt%, based on the total weight of the negative electrode film layer.

In some embodiments, the negative electrode film layer further comprises optionally a binder. The binder can be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). The weight percentage of the binder in the negative electrode film layer is 0-30 wt%, based on the total weight of the negative electrode film layer.

In some embodiments, the negative electrode film layer further comprises optionally a conductive agent. The conductive agent can be selected from at least one of superconducting carbon, acetylene black, carbon black, Ketjen black, carbon dots, carbon nanotubes, graphene, and carbon nanofibers. The weight percentage of the conductive agent in the negative electrode film layer is 0-20 wt%, based on the total weight of the negative electrode film layer.

In some embodiments, the negative electrode film layer further comprises optionally other auxiliaries, for example, a thickener (such as sodium carboxymethyl cellulose (CMC-Na)). The weight percentage of the other auxiliaries in the negative electrode film layer is 0-15 wt%, based on the total weight of the negative electrode film layer.

In some embodiments, the negative electrode plate may be prepared by: dispersing the above components, such as the negative electrode active material, the conductive agent, the binder and any other component, for preparing the negative electrode plate in a solvent (e.g., deionized water) to form a negative electrode slurry which has a solid content of 30 wt%-70 wt%, and adjusting the viscosity at room temperature to 2000 mPa·s-10000 mPa·s; and applying the obtained negative electrode slurry to a negative electrode current collector, followed by a drying process and cold pressing, e.g., by twin rollers, to obtain a negative electrode plate. The coating areal density of the negative electrode powder per unit area is 75 $g/cm^2$-220 $g/cm^2$, and the compacted density of the negative electrode plate is 1.2 grams/cubic meter ($g/m^3$)-2.0 $g/m^3$.

The mass M of the negative electrode active material in the negative electrode membrane per unit area can be obtained by weighing with a standard balance.

The thickness T of the negative electrode membrane can be measured by a sub-micron caliper, for example, it can be measured by Model Mitutoyo293-100 sub-micron caliper with a precision of 0.1 μm. It needs to be noted that the thickness of the negative electrode membrane described in the present application refers to the thickness of the negative electrode membrane in the negative electrode plate which has been compacted by cold pressing and is used for assembling the battery.

[Electrolyte]

The electrolyte plays a role of conducting ions between the positive electrode plate and negative electrode plate. The electrolyte solution in the secondary battery of the present application is a specific electrolyte solution in the present application.

[Separator]

In some embodiments, the secondary battery further comprises a separator. The type of the separator is not particularly limited in the present application, and any well-known separator with a porous structure having good chemical stability and mechanical stability can be selected.

In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some embodiments, the thickness of the separator is 6 μm-40 μm, optionally 12 μm-20 μm.

In some embodiments, the positive electrode plate, the negative electrode plate, and the separator may be made

into an electrode assembly by a winding process or a stacking process.

In some embodiments, the secondary battery can comprise an outer package. The outer package can be used for encapsulating the above electrode assembly and electrolyte.

In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and examples of the plastic can include polypropylene, polybutylene terephthalate, polybutylene succinate, etc.

The shape of the secondary battery is not particularly limited in the present application, and may be a cylinder, a square, or any other shape. For example, FIG. 1 shows a secondary battery 5 with a square structure as an example.

In some embodiments, referring to FIG. 2, the outer package may include a case 51 and a cover plate 53. The case 51 may include a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 contained in the secondary battery 5 can be one or more and can be selected by those skilled in the art according to specific actual requirements.

In some embodiments, the secondary batteries 5 can be assembled into a battery module, and the number of the secondary batteries 5 contained in the battery module can be one or more, and the specific number can be selected by those skilled in the art according to the application and capacity of the battery module.

In the battery module, a plurality of secondary batteries 5 can be sequentially arranged along the length direction of the battery module. Of course, any other arrangement is also possible. The plurality of secondary batteries 5 can be further fixed by fasteners.

Optionally, the battery module can further comprise a shell having an accommodating space, in which the plurality of secondary batteries 5 are accommodated.

In some embodiments, the above battery module may further be assembled into a battery pack, the number of battery modules contained in the battery pack may be one or more, and the specific number can be selected by those skilled in the art according to the use and capacity of the battery pack.

The battery pack can include a battery box and a plurality of battery modules provided in the battery box. The battery box comprises an upper box and a lower box. The upper box can cover the lower box and forms an enclosed space for accommodating the battery module. The plurality of battery modules may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus can include, but is not limited to, a mobile apparatus (e.g., a mobile phone or a laptop), an electric vehicle (e.g., an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

For the electrical apparatus, the secondary battery, the battery module, or the battery pack can be selected according to the use requirements thereof.

FIG. 3 is an electrical apparatus as an example. This electrical apparatus is an all-electric vehicle, a hybrid electric vehicle, or a plug-in hybrid electric vehicle, etc. To satisfy the need of the electrical apparatus for a high power and high energy density of secondary batteries, a battery pack or a battery module can be used.

The device used as another example can be, for example, a mobile phone, a tablet computer, a laptop, etc. The device is generally required to be light and thin and can use a secondary battery as a power source.

The following are some embodiments and comparative embodiments.

To make the technical problems to be solved by the present application, the technical solutions, and the beneficial effects clearer, the present application is further described below in detail with reference to embodiments and the accompanying drawings. It is clear that the described embodiments are only some, rather than all, of the embodiments of the present application. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

In embodiments in which no specific technologies or conditions are indicated, technologies or conditions described in the literatures in the art or product specifications are followed. The reagents or instruments used without manufacturer indicated are all commercially available conventional products.

I. Embodiments

**Embodiment** 1:

1) Preparation of positive electrode plate

Lithium iron phosphate (LFP) with an olivine structure was used as a positive electrode active material. Lithium iron phosphate, polyvinylidene fluoride (PVDF), and carbon black (SP) were mixed and stirred to obtain a uniformly dispersed positive electrode slurry, where the mass ratio of polyvinylidene fluoride to carbon black in the positive electrode slurry was 5:1. The positive electrode slurry was uniformly applied to both surfaces of an aluminum foil, followed by drying, cold pressing, and cutting to obtain a positive electrode plate. The positive electrode plate comprised an aluminum foil and a positive electrode film layer formed on both surfaces of the aluminum foil.
The BET specific surface area of the positive electrode active material was 5 $m^2/g$, the mass fraction of the positive electrode active material in the positive electrode film layer was 90.0%, and the coating areal density of the positive electrode film layer in the positive electrode plate was 0.013 $g/cm^2$.

2) Preparation of negative electrode plate

A negative electrode active material (artificial graphite):carbon black (SP):styrene butadiene rubber (SBR):sodium hydroxymethyl cellulose (CMC) in a mass ratio of 93:1.5:3.5:2 were mixed with a solvent and stirred to obtain a uniformly dispersed negative electrode slurry, and the negative electrode slurry was uniformly applied to both surfaces of a copper foil, followed by drying, cold pressing, and cutting to obtain the negative electrode plate.

3) Separator

A polyethylene film was used as the separator.

4) Preparation of electrolyte solution

In a glove box with an argon atmosphere, based on the mass% of the electrolyte solution, 8% of lithium hexafluorophosphate ($LiPF_6$), 2% of vinylene carbonate (VC), 0.5% of hexamethylene diisocyanate (HDI), 25% of ethylene carbonate (EC), 10% of dimethyl carbonate (DMC), and 20% of ethyl methyl carbonate (EMC) were mixed, with the balance of diethyl carbonate (DEC) made up to 100%, to obtain a corresponding electrolyte solution.

5) Preparation of lithium-ion secondary battery

The positive electrode plate, the negative electrode plate, and the separator were made into an electrode assembly by a winding process or a stacking process, and the electrode assembly was placed in a shell composed of, e.g., an aluminum shell or an aluminum plastic film. After injection with the above electrolyte solution, high-temperature standing, formation, and capacity grading, the secondary battery of Embodiment 1 was obtained.

**Embodiment 2:**

This embodiment was basically the same as Embodiment 1, and the difference from Embodiment 1 was that: the BET specific surface area of the positive electrode active material in the positive electrode plate was 10 $m^2/g$, the mass fraction of the positive electrode active material in the positive electrode film layer was 92.0%, and the coating areal density of the positive electrode film layer in the positive electrode plate was 0.0195 $g/cm^2$.
In the step of the preparation of the electrolyte solution, based on the mass% of the electrolyte solution, 8% of lithium hexafluorophosphate ($LiPF_6$), 2% of vinylene carbonate (VC), 0.3% of hexamethylene diisocyanate (HDI), 25% of ethylene carbonate (EC), 10% of dimethyl carbonate (DMC), and 20% of ethyl methyl carbonate (EMC) were mixed, with the balance of diethyl carbonate (DEC) made up to 100%.

**Embodiment 3:**

This embodiment was basically the same as Embodiment 1, and the difference from Embodiment 1 was that: the BET specific surface area of the positive electrode active material in the positive electrode plate was 15 $m^2/g$, the mass fraction of the positive electrode active material in the positive electrode film layer was 93.0%, and the coating areal density of the positive electrode film layer in the positive electrode plate was 0.0195 $g/cm^2$.
In the step of the preparation of the electrolyte solution, based on the mass% of the electrolyte solution, 8% of lithium hexafluorophosphate ($LiPF_6$), 2% of vinylene carbonate (VC), 0.1% of hexamethylene diisocyanate (HDI), 25% of

ethylene carbonate (EC), 10% of dimethyl carbonate (DMC), and 20% of ethyl methyl carbonate (EMC) were mixed, with the balance of diethyl carbonate (DEC) made up to 100%.

**Embodiment 4:**

This embodiment was basically the same as Embodiment 1, and the difference from Embodiment 1 was that: the BET specific surface area of the positive electrode active material in the positive electrode plate was 25 $m^2/g$, the mass fraction of the positive electrode active material in the positive electrode film layer was 95.0%, and the coating areal density of the positive electrode film layer in the positive electrode plate was 0.0195 $g/cm^2$.

In the step of the preparation of the electrolyte solution, based on the mass% of the electrolyte solution, 8% of lithium hexafluorophosphate ($LiPF_6$), 2% of vinylene carbonate (VC), 0.05% of hexamethylene diisocyanate (HDI), 25% of ethylene carbonate (EC), 10% of dimethyl carbonate (DMC), and 20% of ethyl methyl carbonate (EMC) were mixed, with the balance of diethyl carbonate (DEC) made up to 100%.

**Embodiment 5:**

This embodiment was basically the same as Embodiment 1, and the difference from Embodiment 1 was that: the BET specific surface area of the positive electrode active material in the positive electrode plate was 25 $m^2/g$, the mass fraction of the positive electrode active material in the positive electrode film layer was 96.0%, and the coating areal density of the positive electrode film layer in the positive electrode plate was 0.026 $g/cm^2$.

In the step of the preparation of the electrolyte solution, based on the mass% of the electrolyte solution, 8% of lithium hexafluorophosphate ($LiPF_6$), 2% of vinylene carbonate (VC), 0.005% of hexamethylene diisocyanate (HDI), 25% of ethylene carbonate (EC), 10% of dimethyl carbonate (DMC), and 20% of ethyl methyl carbonate (EMC) were mixed, with the balance of diethyl carbonate (DEC) made up to 100%.

**Embodiment 6:**

This embodiment was basically the same as Embodiment 1, and the difference from Embodiment 1 was that: the BET specific surface area of the positive electrode active material in the positive electrode plate was 25 $m^2/g$, the mass fraction of the positive electrode active material in the positive electrode film layer was 98.0%, and the coating areal density of the positive electrode film layer in the positive electrode plate was 0.026 $g/cm^2$.

In the step of the preparation of the electrolyte solution, based on the mass% of the electrolyte solution, 8% of lithium hexafluorophosphate ($LiPF_6$), 2% of vinylene carbonate (VC), 0.001% of hexamethylene diisocyanate (HDI), 25% of ethylene carbonate (EC), 10% of dimethyl carbonate (DMC), and 20% of ethyl methyl carbonate (EMC) were mixed, with the balance of diethyl carbonate (DEC) made up to 100%.

**Embodiment 7:**

This embodiment was basically the same as Embodiment 1, and the difference from Embodiment 1 was that: the BET specific surface area of the positive electrode active material in the positive electrode plate was 30 $m^2/g$, the mass fraction of the positive electrode active material in the positive electrode film layer was 99.0%, and the coating areal density of the positive electrode film layer in the positive electrode plate was 0.0325 $g/cm^2$.

In the step of the preparation of the electrolyte solution, based on the mass% of the electrolyte solution, 8% of lithium hexafluorophosphate ($LiPF_6$), 2% of vinylene carbonate (VC), 0.001% of hexamethylene diisocyanate (HDI), 25% of ethylene carbonate (EC), 10% of dimethyl carbonate (DMC), and 20% of ethyl methyl carbonate (EMC) were mixed, with the balance of diethyl carbonate (DEC) made up to 100%.

**Embodiment 8:**

This embodiment was basically the same as Embodiment 1, and the difference from Embodiment 1 was that: the BET specific surface area of the positive electrode active material in the positive electrode plate was 13 $m^2/g$, the mass fraction of the positive electrode active material in the positive electrode film layer was 96.0%, and the coating areal density of the positive electrode film layer in the positive electrode plate was 0.0195 $g/cm^2$.

In the step of the preparation of the electrolyte solution, based on the mass% of the electrolyte solution, 8% of lithium hexafluorophosphate ($LiPF_6$), 2% of vinylene carbonate (VC), 0.1% of toluene diisocyanate (TDI), 25% of ethylene carbonate (EC), 10% of dimethyl carbonate (DMC), and 20% of ethyl methyl carbonate (EMC) were mixed, with the balance of diethyl carbonate (DEC) made up to 100%.

**Embodiment 9:**

This embodiment was basically the same as Embodiment 1, and the difference from Embodiment 1 was that: the BET specific surface area of the positive electrode active material in the positive electrode plate was 13 $m^2/g$, the mass fraction of the positive electrode active material in the positive electrode film layer was 96.0%, and the coating areal density of the positive electrode film layer in the positive electrode plate was 0.0195 $g/cm^2$.

In the step of the preparation of the electrolyte solution, based on the mass% of the electrolyte solution, 8% of lithium hexafluorophosphate ($LiPF_6$), 2% of vinylene carbonate (VC), 0.1% of 4-fluorophenyl isocyanate (FPI), 25% of ethylene carbonate (EC), 10% of dimethyl carbonate (DMC), and 20% of ethyl methyl carbonate (EMC) were mixed, with the balance of diethyl carbonate (DEC) made up to 100%.

**Embodiment 10:**

This embodiment was basically the same as Embodiment 1, and the difference from Embodiment 1 was that: the BET specific surface area of the positive electrode active material in the positive electrode plate was 13 $m^2/g$, the mass fraction of the positive electrode active material in the positive electrode film layer was 96.0%, and the coating areal density of the positive electrode film layer in the positive electrode plate was 0.0195 $g/cm^2$.

In the step of the preparation of the electrolyte solution, based on the mass% of the electrolyte solution, 8% of lithium hexafluorophosphate ($LiPF_6$), 2% of vinylene carbonate (VC), 0.1% of 4 cyanophenyl isocyanate (CPI), 25% of ethylene carbonate (EC), 10% of dimethyl carbonate (DMC), and 20% of ethyl methyl carbonate (EMC) were mixed, with the balance of diethyl carbonate (DEC) made up to 100%.

II. Comparative Embodiments

**Comparative Embodiment 1:**

This comparative embodiment was basically the same as Embodiment 1, and the difference from Embodiment 1 was that:

the electrolyte solution did not contain hexamethylene diisocyanate (HDI), and the amount of diethyl carbonate (DEC) was adjusted accordingly.

**Comparative Embodiment 2:**

This comparative embodiment was basically the same as Embodiment 2, and the difference from Embodiment 2 was that:

the electrolyte solution did not contain hexamethylene diisocyanate (HDI), and the amount of diethyl carbonate (DEC) was adjusted accordingly.

**Comparative Embodiment 3:**

This comparative embodiment was basically the same as Embodiment 3, and the difference from Embodiment 3 was that:

the electrolyte solution did not contain hexamethylene diisocyanate (HDI), and the amount of diethyl carbonate (DEC) was adjusted accordingly.

**Comparative Embodiment 4:**

This comparative embodiment was basically the same as Embodiment 4, and the difference from Embodiment 4 was that:

the electrolyte solution did not contain hexamethylene diisocyanate (HDI), and the amount of diethyl carbonate (DEC) was adjusted accordingly.

**Comparative Embodiment 5:**

This comparative embodiment was basically the same as Embodiment 5, and the difference from Embodiment 5 was that:

the electrolyte solution did not contain hexamethylene diisocyanate (HDI), and the amount of diethyl carbonate (DEC) was adjusted accordingly.

**Comparative Embodiment 6:**

This comparative embodiment was basically the same as Embodiment 6, and the difference from Embodiment 6 was that:
the electrolyte solution did not contain hexamethylene diisocyanate (HDI), and the amount of diethyl carbonate (DEC) was adjusted accordingly.

**Comparative Embodiment 7:**

This comparative embodiment was basically the same as Embodiment 7, and the difference from Embodiment 7 was that:
the electrolyte solution did not contain hexamethylene diisocyanate (HDI), and the amount of diethyl carbonate (DEC) was adjusted accordingly.

III. Performance test

1) Determination of initial directive current resistance (DCR)

At room temperature, the secondary battery of each of the embodiments and comparative embodiments was charged at a constant current of 0.5 C to 3.65 V and then charged at a constant voltage to a current of 0.05 C. The secondary battery was discharged at a constant current of 0.5 C for 30 minutes to adjust the battery to 50% SOC. At this time the voltage of the battery was denoted as U1. The battery was discharged at a constant current of 4 C for 30 seconds, with data sampling every 0.1 second. The voltage at the later phase of discharge was denoted as U2. The discharge DCR at 50% SOC of the battery represents the initial DCR of the battery. The initial DCR of the battery = (U1 - U2) / 4C.

2) Determination of high-temperature cycling performance at 60°C

At 60°C, the secondary battery of each of the embodiments and comparative embodiments was charged at a constant current of 1/3 C to 3.65 V and then charged at the constant voltage to a current of 0.05 C. The battery was left to stand for 5 minutes and discharged at a constant current of 1/3 C to 2.5 V, which was the first charge-discharge cycle of the battery, and this discharge capacity after this cycle was denoted as the first-cycle discharge capacity of the battery. According to the above method, the battery was subjected to 1000 cycles of the charge-discharge process, and the discharge capacity of the battery after 1000 cycles was recorded. The capacity retention rate (%) of the battery after 1000 cycles at 60°C = (the discharge capacity of the battery after 1000 cycles / the first-cycle discharge capacity of the battery) × 100%.

3) Determination of high-temperature storage performance at 60°C

At 25°C, the secondary battery of each of the embodiments and comparative embodiments was charged at a constant current of 1/3 C to 3.65 V and then charged at a constant voltage to a current of 0.05 C. The battery cells at 100% SOC were separately placed in a high-and-low-temperature chamber at 60°C. The real capacity of the battery cell was measured once every 30 days (discharging at 1/3 C to 2.5 V, discharging at 0.04 C to 2.0 V, recording the real capacity of the battery cell, and charging at 1/3 C to 3.65 V) until the battery cell was stored at 60°C for 200 days.
The parameters of the electrolyte solutions of the secondary batteries of Embodiments 1-10 and Comparative Embodiments 1-7 are detailed in Table 1. The parameter and performance test data of the positive electrode plates of the secondary batteries of Embodiments 1-10 and Comparative Embodiments 1-7 are detailed in Table 2.

Table 1

| Item | Composition of electrolyte solution | | | | | | | | | | | | |
|---|---|---|---|---|---|---|---|---|---|---|---|---|---|
| | Solvent | | | | Film-forming auxiliary agent | | | | Compound containing isocyanate group | | | | Lithium salt |
| | EC (%) | DMC (%) | EMC (%) | DEC (%) | VC (%) | FEC (%) | DTD (%) | PS (%) | HDI (%) | TDI (%) | FPI (%) | CPI (%) | $LiPF_6$ (%) |
| Embodiment 1 | 25 | 10 | 20 | 35 | 2.0 | - | - | - | 0.500 | - | - | - | 8 |
| Embodiment 2 | 25 | 10 | 20 | 35 | 2.0 | - | - | - | 0.300 | - | - | - | 8 |
| Embodiment 3 | 25 | 10 | 20 | 35 | 2.0 | - | - | - | 0.100 | - | - | - | 8 |
| Embodiment 4 | 25 | 10 | 20 | 35 | 2.0 | - | - | - | 0.050 | - | - | - | 8 |
| Embodiment 5 | 25 | 10 | 20 | 35 | 2.0 | - | - | - | 0.005 | - | - | - | 8 |
| Embodiment 6 | 25 | 10 | 20 | 35 | 2.0 | - | - | - | 0.001 | - | - | - | 8 |
| Embodiment 7 | 25 | 10 | 20 | 35 | 2.0 | - | - | - | 0.001 | - | - | - | 8 |
| Embodiment 8 | 25 | 10 | 20 | 35 | 2.0 | - | - | - | - | 0.1 | - | - | 8 |
| Embodiment 9 | 25 | 10 | 20 | 35 | 2.0 | - | - | - | - | - | 0.1 | - | 8 |
| Embodiment 10 | 25 | 10 | 20 | 35 | 2.0 | - | - | - | - | - | - | 0.1 | 8 |
| Comparative Embodiment 1 | 25 | 10 | 20 | 35 | 2.0 | - | - | - | - | - | - | - | 8 |
| Comparative Embodiment 2 | 25 | 10 | 20 | 35 | 2.0 | - | - | - | - | - | - | - | 8 |

(continued)

| Item | Composition of electrolyte solution | | | | | | | | | | | | |
|---|---|---|---|---|---|---|---|---|---|---|---|---|---|
| | Solvent | | | | Film-forming auxiliary agent | | | | Compound containing isocyanate group | | | | Lithium salt |
| | EC (%) | DMC (%) | EMC (%) | DEC (%) | VC (%) | FEC (%) | DTD (%) | PS (%) | HDI (%) | TDI (%) | FPI (%) | CPI (%) | $LiPF_6$ (%) |
| Comparative Embodiment 3 | 25 | 10 | 20 | 35 | 2.0 | - | - | - | - | - | - | - | 8 |
| Comparative Embodiment 4 | 25 | 10 | 20 | 35 | 2.0 | - | - | - | - | - | - | - | 8 |
| Comparative Embodiment 5 | 25 | 10 | 20 | 35 | 2.0 | - | - | - | - | - | - | - | 8 |
| Comparative Embodiment 6 | 25 | 10 | 20 | 35 | 2.0 | - | - | - | - | - | - | - | 8 |
| Comparative Embodiment 7 | 25 | 10 | 20 | 35 | 2.0 | - | - | - | - | - | - | - | 8 |

| Item | Positive electrode plate | | | | Performance of secondary battery | | |
|---|---|---|---|---|---|---|---|
| | b ($cm^2/g$) | c (%) | d ($g/cm^2$) | bcd/10000a | DCR (mohm) | Capacity retention rate after 1000 cycles at 60°C | Capacity retention rate after storage at 60°C for 200 days |
| Embodiment 1 | 50000 | 90.0 | 0.013 | 11.7 | 738.9 | 94.9% | 98.1% |
| Embodiment 2 | 100000 | 92.0 | 0.0195 | 59.8 | 671.7 | 93.6% | 96.7% |
| Embodiment 3 | 150000 | 93.0 | 0.0195 | 272.03 | 638.1 | 92.6% | 95.7% |
| Embodiment 4 | 250000 | 95.0 | 0.0195 | 926.25 | 604.5 | 91.4% | 94.4% |

(continued)

| Item | Positive electrode plate | | | | Performance of secondary battery | | |
|---|---|---|---|---|---|---|---|
| | b ($cm^2/g$) | c (%) | d ($g/cm^2$) | bcd/10000a | DCR (mohm) | Capacity retention rate after 1000 cycles at 60°C | Capacity retention rate after storage at 60°C for 200 days |
| Embodiment 5 | 250000 | 96.0 | 0.026 | 12480 | 611.2 | 89.3% | 92.3% |
| Embodiment 6 | 250000 | 98.0 | 0.026 | 63700 | 618.0 | 88.7% | 91.6% |
| Embodiment 7 | 300000 | 99.0 | 0.0325 | 96525 | 593.4 | 86.6% | 89.4% |
| Embodiment 8 | 130000 | 96.0 | 0.0195 | 243.36 | 599.7 | 92.2% | 95.2% |
| Embodiment 9 | 130000 | 96.0 | 0.0195 | 243.36 | 582.0 | 92.3% | 95.5% |
| Embodiment 10 | 130000 | 96.0 | 0.0195 | 243.36 | 597.8 | 92.2% | 95.7% |
| Comparative Embodiment 1 | 50000 | 90.0 | 0.013 | - | 671.7 | 86.3% | 97.0% |
| Comparative Embodiment 2 | 100000 | 92.0 | 0.0195 | - | 610.6 | 85.1% | 95.6% |
| Comparative Embodiment 3 | 150000 | 93.0 | 0.0195 | - | 580.1 | 84.2% | 94.6% |
| Comparative Embodiment 4 | 250000 | 95.0 | 0.0195 | - | 549.6 | 83.1% | 93.3% |
| Comparative Embodiment 5 | 250000 | 96.0 | 0.026 | - | 555.7 | 81.2% | 91.2% |

(continued)

| Item | Positive electrode plate | | | | Performance of secondary battery | | |
|---|---|---|---|---|---|---|---|
| | b ($cm^2/g$) | c (%) | d ($g/cm^2$) | bcd/10000a | DCR (mohm) | Capacity retention rate after 1000 cycles at 60°C | Capacity retention rate after storage at 60°C for 200 days |
| Comparative Embodiment 6 | 250000 | 98.0 | 0.026 | - | 561.8 | 80.6% | 90.5% |
| Comparative Embodiment 7 | 300000 | 99.0 | 0.0325 | - | 539.5 | 78.7% | 88.3% |

In Table 2, b is the BET specific surface area of the positive electrode active material; c is the mass fraction of the positive electrode active material in the positive electrode film layer; d is the coating areal density of the positive electrode film layer in the positive electrode plate of the secondary battery; and the mass fraction of the compound containing the isocyanate group in the electrolyte solution of the secondary battery is a.

From the data of the above embodiments and comparative embodiments, it can be seen that by using the compound containing the isocyanate group as an additive in the electrolyte solution of the secondary battery of the present application and controlling the value of bcd/a in the specific range, the content of the compound containing the isocyanate group in the electrolyte solution of the secondary battery can be moderate, so that not only can the water in the electrolyte solution be effectively removed to reduce the influence of water on the cycling performance and storage performance of the secondary battery, thus prolonging the service life of the secondary battery, but also a significant increase in the direct current impedance of the secondary battery due to an excessive amount of the isocyanate compound can be avoided, without causing a considerable influence on the charging performance of the secondary battery.

By comparing Embodiment 1 with Comparative Embodiment 1, Embodiment 2 with Comparative Embodiment 2, Embodiment 3 with Comparative Embodiment 3, Embodiment 4 with Comparative Embodiment 4, Embodiment 5 with Comparative Embodiment 5, Embodiment 6 with Comparative Embodiment 6, and Embodiment 7 with Comparative Embodiment 7, it can be seen that where the other conditions are the same, by adding the compound containing the isocyanate group to the electrolyte solution of the embodiment and controlling the content thereof within the range of the present application, the cycling performance and storage performance of the secondary battery can be effectively improved, thus prolonging the service life of the secondary battery. Moreover, although the initial directive current resistance (DCR) of the secondary battery is increased due to the addition of the compound containing the isocyanate group, the increase is not large, which results in a relatively small influence on the charging performance of the secondary battery.

By the comparison of the embodiments, it can be seen that in Embodiments 3-10, by controlling the value of bcd/10000a within the range of 243-96525, the initial directive current resistance of the secondary battery can be further reduced, and the initial directive current resistance thereof can reach 639 mohm or less. In addition, in Embodiments 1 and 2, the values of bcd/10000a are 11.7 and 59.8, respectively, and the initial directive current resistances thereof are both 670 mohm or more.

By the comparison of the embodiments, it can also be seen that in Embodiments 4 and 8-10, by controlling the value of bcd/10000a within the range of 243-927, not only can the initial directive current resistance of the secondary battery be smaller, but also the cycling performance and storage performance thereof also better. The capacity retention rates thereof after cycling at 60°C are all 89.9% or more, and the capacity retention rates thereof after storage at 60°C are all 94.4% or more. In addition, in Embodiments 5-7, the value of bcd/10000a is not in the above range. Although the initial directive current resistances thereof are also smaller, the cycling performances and storage performances thereof are significantly lower than those of Embodiments 4 and 8-10. This indicates that controlling the value of bcd/10000a within the range of 243-927 can impart the secondary battery with a better comprehensive performance.

It needs to be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the gist of the present application, various modifications that are made to the embodiments and conceivable to those skilled in the art, and other modes constructed by combining some of the constituent elements of the embodiments are also included in the scope of the present application.

## Claims

1. A secondary battery, comprising a positive electrode plate, a negative electrode plate, and an electrolyte solution, wherein the positive electrode plate comprises a positive electrode film layer, and the positive electrode film layer contains a positive electrode active material; and the electrolyte solution comprises a solvent, a lithium salt, and an additive, the additive comprises a compound containing an isocyanate group, the mass fraction of the compound containing the isocyanate group in the electrolyte solution is a, with $11 \le n/10000a \le 96600$ where $n = b \times c \times d$; where n is the real surface area of the positive electrode active material per unit apparent surface area; b is the BET specific surface area of the positive electrode active material, in $cm^2/g$; c is the mass fraction of the positive electrode active material in the positive electrode film layer; and d is the coating areal density of the positive electrode film layer, in $g/cm^2$.

2. The secondary battery according to claim 1, wherein $243 \le n/10000a \le 96525$.

3. The secondary battery according to claim 1, wherein $243 \le n/10000a \le 927$.

4. The secondary battery according to any one of claims 1 to 3, wherein the range of b is 50000 $cm^2/g$-300000 $cm^2/g$.

5. The secondary battery according to any one of claims 1 to 4, wherein the range of c is 90%-99%.

6. The secondary battery according to any one of claims 1 to 5, wherein the range of d is 0.013 $g/cm^2$-0.0325 $g/cm^2$.

7. The secondary battery according to any one of claims 1 to 6, wherein the range of a is 0.001%-0.5%.

8. The secondary battery according to any one of claims 1 to 7, wherein the compound containing the isocyanate group comprises one or more of compounds of the following structural formulas:

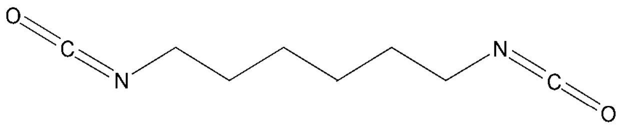 ; 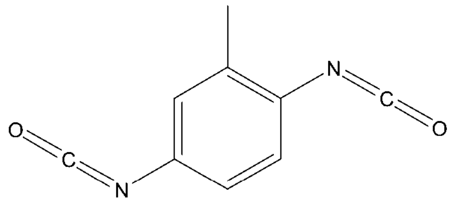 ;

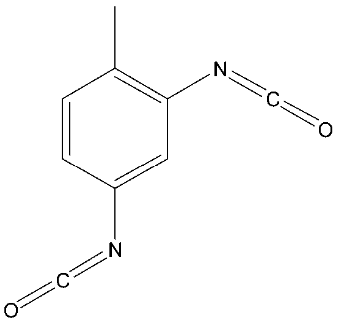 ; 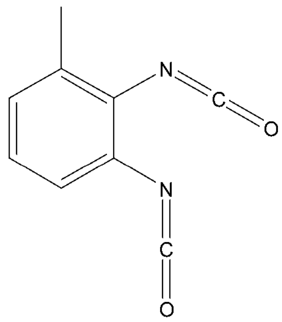 ; 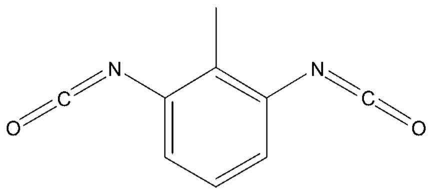 ;

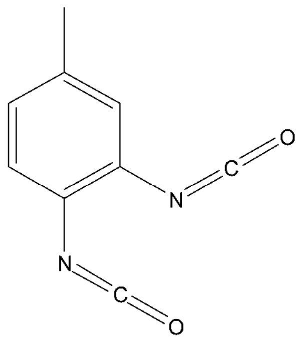 ; 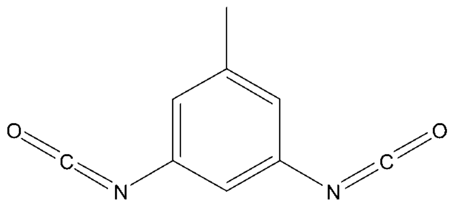 ; 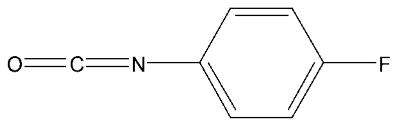 ;

and

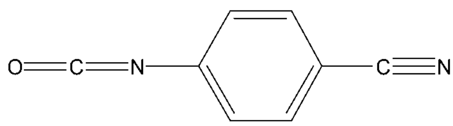 .

9. The secondary battery according to any one of claims 1 to 8, wherein the additive further comprises a film-forming auxiliary agent, and the film-forming auxiliary agent comprises an unsaturated carbonate.

10. The secondary battery according to any one of claims 1 to 9, wherein the solvent comprises one or more of a cyclic ester and a chain ester.

11. The secondary battery according to claim 10, wherein the cyclic ester comprises one or more of ethylene carbonate,

propylene carbonate, fluoroethylene carbonate, and γ-butyrolactone.

**12.** The secondary battery according to claim 10 or 11, wherein the chain ester comprises one or more of dimethyl carbonate, ethyl methyl carbonate, diethyl carbonate, methyl formate, methyl acetate, ethyl acetate, methyl acetate, methyl propionate, ethyl propionate, methyl butyrate, and ethyl butyrate.

**13.** The secondary battery according to any one of claims 1 to 12, wherein the lithium salt comprises one or more of $LiPF_6$, $LiAsF_6$, $LiBF_4$, LiSCN, $LiTaF_6$, $LiSnF_6$, and $LiCF_3SO_3$.

**14.** The secondary battery according to any one of claims 1 to 13, wherein the positive electrode active material comprises one or more of lithium iron phosphate, lithium nickel cobalt manganese oxide, lithium nickel cobalt aluminum oxide, lithium cobalt oxide, lithium manganate, lithium manganese phosphate, and lithium iron manganese phosphate.

**15.** An electrical apparatus, comprising the secondary battery according to any one of claims 1 to 14.

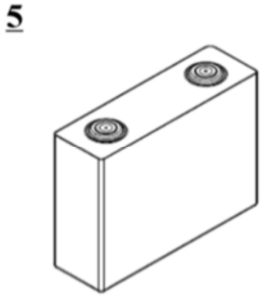


FIG. 1

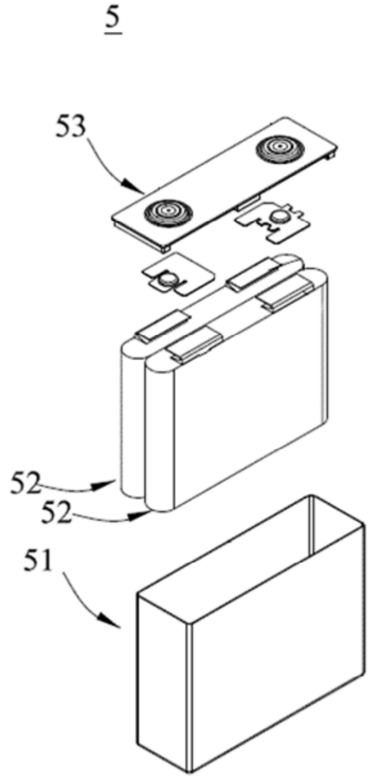


FIG. 2

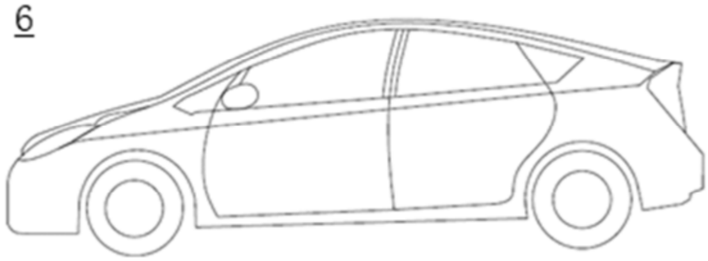


FIG. 3

## INTERNATIONAL SEARCH REPORT

International application No.
**PCT/CN2023/091092**

**A. CLASSIFICATION OF SUBJECT MATTER**

H01M10/0567(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXTC, WPABSC, ENTXT, DWPI, CNKI: 正极, 阴极, 电解液, 表面积, 密度, 异氰酸酯, positive, cathode, electrolyte, surface, area, density, isocyanate

**C. DOCUMENTS CONSIDERED TO BE RELEVANT**

| Category* | Citation of document, with indication, where appropriate, of the relevant passages | Relevant to claim No. |
|---|---|---|
| X | JP 2015144104 A (DENSO CORP.) 06 August 2015 (2015-08-06)<br>description, paragraphs 8-47 | 1-15 |
| X | CN 115911560 A (SUNWODA ELECTRONIC CO., LTD.) 04 April 2023 (2023-04-04)<br>description, paragraphs 4-94 | 1-7, 9-15 |
| X | CN 111430796 A (DONGGUAN SHANSHAN BATTERY MATERIALS CO., LTD. et al.) 17 July 2020 (2020-07-17)<br>description, paragraphs [0007]-[0091] | 1-7, 9-15 |
| A | CN 114649591 A (NINGDE AMPEREX TECHNOLOGY LTD.) 21 June 2022 (2022-06-21)<br>entire document | 1-15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **12 December 2023** | **25 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2023/091092**

| Patent document cited in search report | | | Publication date (day/month/year) | Patent family member(s) | Publication date (day/month/year) |
|---|---|---|---|---|---|
| JP | 2015144104 | A | 06 August 2015 | None | |
| CN | 115911560 | A | 04 April 2023 | None | |
| CN | 111430796 | A | 17 July 2020 | None | |
| CN | 114649591 | A | 21 June 2022 | None | |

Form PCT/ISA/210 (patent family annex) (July 2022)